# EUROPÄISCHE PATENTSCHRIFT

(11) **EP 0 703 465 B1**
(45) Veröffentlichungstag und Bekanntmachung des Hinweises auf die Patenterteilung: **04.04.2001**
(21) Anmeldenummer: 95114455.9
(22) Anmeldetag: 14.09.1995
(51) Int. Cl.: G01S 13/10, G01S 13/28, G01S 13/24

(54) **Puls-Radarverfahren**
Pulse radar method
Procédé pour radar à impulsions

(30) Priorität: 22.09.1994 DE 4433775
(43) Veröffentlichungstag der Anmeldung: 27.03.1996
(73) Patentinhaber: DaimlerChrysler AG, 70567 Stuttgart (DE)
(72) Erfinder: Schneider, Robert, D-89233 Neu-Ulm (DE); Wanielik, Gerd, D-89079 Ulm (DE); Wenger, Josef, Dr., D-89250 Senden (DE)
(74) Vertreter: Fröhling, Werner Otto, Dr.

(56) Entgegenhaltungen:
- EP-A- 0 529 704
- GB-A- 2 249 448

## Beschreibung

Die Erfindung betrifft ein Puls-Radarverfahren.

Bei einem Puls-Radarverfahren ist im Standard-Fall die Entfernungsauflösung durch die Sendepulslänge bestimmt. Die Abtastrate, mit der aus dem Empfangssignal zu festlegbaren Zeitpunkten Abtastwerte für die digitale Verarbeitung der Empfangssignale gewonnen werden, ist auf die Sendepulslänge abgestimmt.

Eine Verbesserung der Entfernungsauflösung durch Verkürzung von Sendepulslänge und entsprechender Erhöhung der Abtastrate führt zu hohen Anforderungen an die digitale Signalverarbeitung hinsichtlich der Datenrate und insbesondere der Wandlerrate der eingesetzten Analog-Digital-Wandler. Verfahren, welche eine höhere Entfernungsauflösung erzielen, als es der dabei gewählten Abtastrate im Standardfall entspricht, erfordern mehr Zeit zur vollständigen lückenlosen Abtastung des gesamten Überwachungsbereichs und sind teilweise auch weniger geeignet zu der üblichen Dopplerverarbeitung der Empfangssignale.

Die Schrift EP-A-0 529 704 zeigt ein Verfahren, welches nach der Entdeckung eines Zieles in einem ersten Auflösungsmodus, in einem weiteren Schritt auf einen zweiten, höher auflösenden Modus übergehen um mit dieser höheren Auflösung das Ziel exakter zu lokalisieren. Dabei greift die Schrift zur Erzeugung der höheren Auflösung auf ein Signal höherer Bandbreite zurück, als dies im ersten Schritt für eine Grobauflösung notwendig war. Durch die Vergrößerung der Bandbreite ergibt sich eine schärfer ausgeprägte Spitze bei der Autokorrelationsfunktion der ausgesandten Welle und somit eine exaktere Entfernungsauflösung. Um das am Ziel reflektierte Signal in seiner gesamten Bandbreite richtig verarbeiten zu können, muß hierzu die Verarbeitungsgeschwindigkeit des Analog-Digital-Wandlers in diesem hochauflösenden Modus signifikant gegenüber dem ersten, grob auflösenden Modus gesteigert werden.

In GB-A-2 249 448 wird alternativ hierzu ein hochauflösendes Verfahren zur Entfernungsschätzung beschrieben, welches den Entfernungsbereich mit im Frequenzmultiplex geschalteten Pulsen abtastet. Durch die empfangseitig frequenz-spezifische Trennung der reflektierten Pulse läßt sich mittels einer moderaten Pulswiederholfrequenz eine relativ gute Entfernungsauflösung auch im Nahbereich erzielen.

Aufgabe der Erfindung ist es ein Verfahren zu finden, welches es ermöglicht die Entfernungsauflösung innerhalb eines Meßvorgangs zu erhöhen, ohne notwendigerweise auf schnell abtastende oder frequenzselektive Hardware zurückgreifen zu müssen.

Wesentlich an der Erfindung ist, daß die schnelle Bereichsüberwachung und die hohe Entfernungsauflösung in getrennten Schritten mit unterschiedlichen Verfahren durchgeführt werden. Dies hat den weiteren besonderen Vorteil, daß nach Maßgabe der aus der schnellen Bereichsüberwachung im ersten Modus gewonnenen Ergebnisse situationsangepaßt eines von mehreren verfügbaren Verfahren mit höherer Entfernungsauflösung im zweiten Modus ausgewählt werden kann. Diese Vorgehensweise kann auch mit schrittweise erhöhter Entfernungsauflösung kaskadiert werden. Vorzugsweise wird im ersten Modus eine Dopplerbestimmung durchgeführt werden. Vorzugsweise wird im ersten Modus eine Dopplerbestimmung durchgeführt, deren Ergebnis bei der Auswahl eines Verfahrens für den zweiten Modus mit einbezogen wird. Durch einen vorausgehenden ersten Modus, welcher ggf. eine oder mehrere Zielmeldungen mit geringerer Entfernungsauflösung liefert, kann der im zweiten Modus mit hoher Entfernungsauflösung untersuchte Entfernungsbereich auf einen Teilbereich eingeschränkt werden.

Die Erfindung ist nachfolgend anhand von bevorzugten Ausführungsbeispielen unter Bezugnahme auf die Abbildungen noch eingehend veranschaulicht.

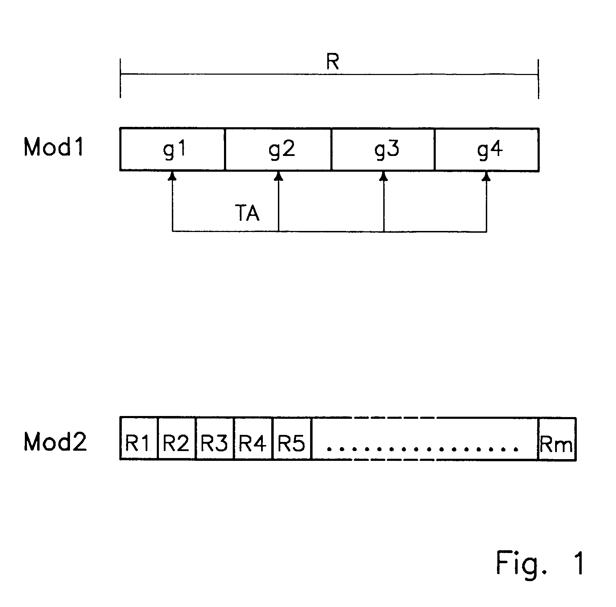

In FIG. 1 ist der Wechsel von einer schnellen Bereichsüberwachung in einen ersten Modus mit grober Entfernungsauflösung zur einem zweiten Modus mit höherer Entfernungsauflösung skizziert. Für einen ersten Modus Mod 1 ist eine Auflösung des gesamten Entfernungsbereichs R in ein erstes grobes Entfernungsraster mit Entfernungstoren g1, g2, g3, g4 bei einer Abtastfolgezeit TA angenommen. Die Länge TS der Sendepulse und die Abtastfolgezeit TA sind im Standardverfahren des Pulsradars korreliert und es gilt TA≤TS. Es ergibt sich dabei eine lückenlose Abtastung des gesamten Entfernungsbereichs in kurzer Zeit bei niedriger Abtastrate. Typische Werte für ein Kraftfahrzeug-Abstandswarnradar sind beispielsweise R = 150m, TA = 30nsec, Zahl der Entfernungstore 30.

Solange im ersten Modus kein Ziel entdeckt wird, kann dieser Modus beibehalten werden. Nach einer Zielentdeckung und ggf. über eine Dopplerverarbeitung der Ermittlung der Relativgeschwindigkeit des Ziels kann dann zur genaueren Bestimmung der Zielentfernung in den zweiten Modus Mod 2 umgeschaltet werden, wobei u.U. in diesem zweiten Modus nur ein Teilbereich, in welchem im ersten Modus eine Zielmeldung auftrat, untersucht zu werden braucht. Die höhere Entfernungsauflösung im zweiten Modus entspricht einer feineren Unterteilung des Entfernungsbereichs in Entfernungsinkremente R1, R2, ..., Rm.

Im zweiten Modus wird die Beziehung TA<TS nicht weiter als notwendig vorausgesetzt. Vielmehr können hier komplexere und auch zeitaufwendigere Verfahren vorgesehen sein. Vorzugsweise sind für den zweiten Modus mehrere unterschiedliche Verfahren mit höherer Entfernungsauflösung verfügbar, von denen nach Maßgabe der im ersten Modus gewonnenen Ergebnisse ein Verfahren ausgewählt wird. Die Auswahl kann insbesondere mittels eine Zuordnungseinheit anhand einer in Form einer Speichertabelle und/oder einer Funktion gespeicherten Zuordnungsvorschrift erfolgen, für welche im ersten Modus festgestellte Zieleigenschaften, wie z.B. Relativgeschwindigkeit, Polarisationsverhalten, Rückstreuquerschnitt als Parameter herangezogen werden.

Im folgenden sind zwei bevorzugte Verfahren für die Erhöhung der Entfernungsauflösung im zweiten Modus näher beschrieben, bei denen insbesondere A/D-Wandler mit geringer Wandler-Rate einsetzbar sind.

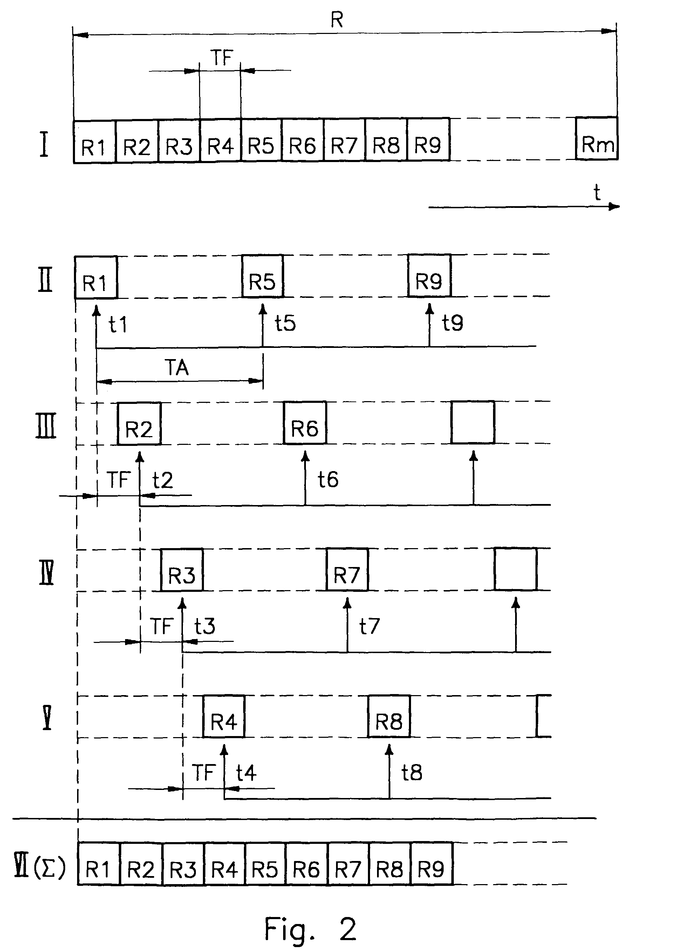

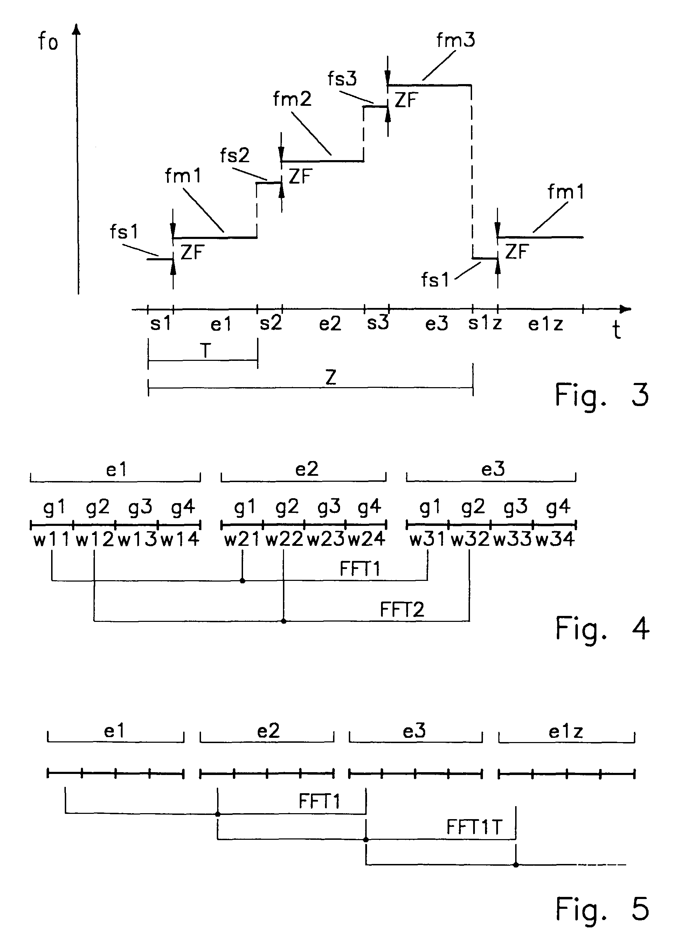

Das in FIG. 2 skizzierte Verfahren beruht auf verkürzten Sendepulsen in Verbindung mit einer von Radarperiode zu Radarperiode zeitversetzten Staffelung der Abtastzeitpunkte. Bei dem in FIG. 3 bis FIG. 7 skizzierten Verfahren werden mehrere Sendefrequenzen in Verbindung mit einer Frequenz-Zeit-Transformation eingesetzt.

In der Zeile I der FIG. 2 ist die Unterteilung des gesamten überwachten Entfernungsbereichs R in eine Vielzahl von Entfernungsinkrementen R1, R2..., Rm skizziert. Die Länge der Entfernungsinkremente im Empfangssignal beträgt TF. Sie ist an die Länge der Sendepulse gekoppelt.

In der Zeile II ist angenommen, daß die maximal mögliche Wandlungsrate eines A/D-Wandlers eine minimale Wandlungsfolgezeit entsprechend einem Mehrfachen der Zeitfensterlänge TF erfordert. Die Folgezeit TA aufeinanderfolgender Abtastungen wird dann gleich der oder größer als diese minimale Wandlungsfolgezeit gewählt, im skizzierten Beispiel ist eine Abtastfolgezeit TA gleich der vierfachen Zeitfensterlänge TF zugrunde gelegt. Entsprechendes gilt für die Zeilen III, IV, und V, die verschiedenen Radarperioden entsprechen.

Die Zeitachsen sind dabei jeweils auf einen innerhalb der betroffenen Radarperiode einheitlich definierten Zeitpunkt, beispielsweise den Beginn des Sendepulses, bezogen.

Die Zeilen II bis V unterscheiden sich wesentlich in der relativen Lage des Zeit-Rasters, das durch die in regelmäßigen Zeitabständen vorgenommenen Abtastungen jeweils definiert ist.

Die Abtastraster sind jeweils um die Länge TF eines Zeitfensters verschoben, so daß sich vier mögliche relative Lagen des Abtastrasters innerhalb der Radarperiode ergeben. Beispielsweise werden in einer ersten Radarperiode gemäß Zeile II der Abbildung Abtastwerte zu relativen Zeitpunkten t1, t5, t9,...jeweils mit einer Zeitfensterlänge TF gewonnen entsprechend den Empfangssignalen aus den Entfernungsinkrementen R1, R5, R9,.... In weiteren Radarperioden gemäß Zeilen III bis V werden in entsprechender Weise zu relativen Zeitpunkten t2, t6,... bzw. t3, t7,... bzw. t4, t8,... Abtastwerte aus R2, R6,...bzw. R3, R7,... bzw. R4, R8,... gewonnen. Die aus Radarperioden zu vier verschiedenen relativen Zeitlagen des Abtastrasters gewonnenen Abtastwerte können durch Einordnen in der Reihenfolge ihrer relativen Abtastzeitpunkte ti (i = 1 bis m) zu einer lückenlosen Abtastwertfolge mit Abtastwerten zu jedem Entfernungsinkrement Ri zusammengefaßt werden (Zeile VI).

Die Radarperioden mit verschiedenen relativen Lagen der Abtastzeitraster folgen nicht notwendigerweise zeitlich unmittelbar aufeinander. Es ist auch möglich, eine Gruppe von Radarperioden (Burst) mit identischen relativen Zeitrastern zeitlich zu bündeln z.B. für eine Dopplerverarbeitung, und Gruppen mit verschiedenen relativen Zeitrastern zeitlich nacheinander abzuwickeln. Die in der Abbildung skizzierte Vorgehensweise mit Staffelung der Abtastzeitpunkte von Radarperiode zu Radarperiode bietet ebenfalls, allerdings in reduziertem Ausmaß, die Möglichkeit einer Dopplerverarbeitung.

Vorzugsweise wird in einem vorangehenden Detektionsmodus die Länge der Sendepulse und damit die Länge der Zeitfenster in gebräuchlicher Weise mit der Abtastrate abgestimmt und somit eine grobe Entfernungsauflösung erreicht. In diesem Modus kann bei einer Zielentdeckung auch eine schnelle und über einen weiten Dopplerbereich eindeutige Bestimmung der relativen Zielgeschwindigkeit erfolgen. Nach Maßgabe der in diesem Detektionsmodus erfolgten Zielentdeckungen und Dopplerschätzungen kann in flexibler Abtaststrategie nachfolgend auf kürzere Sendepulslängen und entsprechend kürzere Abtastzeitfenster mit zeitlicher Staffelung in verschiedenen Radarperioden übergegangen werden. Dabei kann auch eine sukzessive Verkürzung der Abtastzeitfenster in mehreren Schritten erfolgen.

Da dann nur bei einer vorherigen Zielentdeckung mit grober Entfernungsauflösung eine feinere Entfernungsauflösung nach der vorliegenden Erfindung durchgeführt wird, kann im letztgenanntem Schritt eine Ineinanderschachtelung von Radarperioden vorzugsweise mit unterschiedlicher Sendefrequenz vorgenommen und damit eine Verkürzung der effektiven Informationserneuerungszeit erreicht werden.

Die schnellen Zeittorschaltungen können auch ohne eine Verkürzung der Sendepulsdauer zur Erhöhung einer Entfernungsschätzung eingesetzt werden, indem in der beschriebenen Weise die Abtastzeitpunkte innerhalb einer Radarperiode im Zeitabstand TA und in verschiedenen Radarperioden um kleinere Zeitdifferenzen entsprechend TF gestaffelt gelegt werden, so daß sich ein Echopuls im Empfangssignal über mehrere Zeitabschnitte der Länge TF erstreckt. Eine Entfernungsschätzung kann dann durch Analyse der Signaleinhüllenden des Empfangssignals, z.B. Flankendetektoren vorgenommen werden.

Der Übersichtlichkeit halber sind die in FIG. 3 bis 7 skizzierten Beispiele auf drei verschiedene Sendefrequenzen beschränkt.

In FIG. 3 sind über einer Zeitachse t Oszillatorfrequenzen fo für die Sendepulse und die Überlagerungssignale (LO) aufgetragen. Die Zeitachse ist in Sendeabschnitte S1, S2,... und Empfangsabschnitte e1, e2... unterteilt. Umschaltzeiten für den Wechsel zwischen Sendeabschnitten und Empfangsabschnitten sowie Frequenzumschaltzeiten sind nicht berücksichtigt. Vorzugsweise werden die verschiedenfrequenten Signale alle in einer steuerbar frequenzvariablen Oszillatoranordnung erzeugt.

Während eines ersten Sendeabschnittes S1 innerhalb eines Zyklus Z wird ein Sendepuls der ersten Sendefrequenz fs1 abgestrahlt. An diesen ersten Sendeabschnitt schließt sich ein erster Empfangsabschnitt e1 an, während dessen die hochfrequenten Empfangssignale mit einer ersten LO-Frequenz fml in eine Zwischenfrequenzlage umgesetzt werden. Diese erste LO-Frequenz fm1 ist um die Zwischenfrequenz ZF gegen die erste Sendefrequenz versetzt (|fm1 - fs1| = ZF). Ein Zyklus Z umfaßt mehrere solcher Sende-Empfangs-Abschnitte S1/e1, S2/e2, S3/e3 mit unterschiedlichen Sendefrequenzen fs1, fs2, fs3 und mehreren LO-Frequenzen fm1, fm2, fm3, die jeweils so gewählt sind, daß |fm1-fs1| = |fm2-fs2| = |fm3-fs3| = ZF.

Die Sendeimpulse folgen aufeinander mit einer Pulswiederholzeit T. Vorteilhafterweise setzt sich der Zyklus Z periodisch fort mit einem Sendepuls der Frequenz fsl in einem neuen Sendeabschnitt s1Z, einem Empfangsabschnitt e1Z mit einer LO-Frequenz fml usw.

In FIG. 4 ist für einen Zyklus Z mit Empfangsabschnitten e1, e2, e3 nach FIG. 1 eine Unterteilung in Entfernungstore gl, g2, g3, g4 entsprechend vier Abtastintervallen im Zeilenabstand TA in jedem Empfangsabschnitt skizziert. Die in den einzelnen Empfangsabschnitten und jeweiligen Entfernungstoren gewonnenen komplexen Abtastwerte sind mit wik bezeichnet, wobei i für die Laufzahl der gestaffelten Sendefrequenzen und k für die Laufzahl der aufeinanderfolgenden Entfernungstore steht.

Die Abtastwerte aus ein und demselben Entfernungstor, z.B. g1, zu verschiedenen Sendefrequenzen werden zu einer Wertegruppe wi1 = (w11, w21, w31) zusammengefaßt und einer Frequenz-Zeit-Transformation unterzogen. Vorzugsweise bilden die verschiedenen Sendefrequenzen ein mit Δf = |fs2 - fs1| = |fs3 - fs2| äquidistantes Frequenzraster und wird die Transformation mittels einer Fast-Fourier-Transform FFT durchgeführt. Im Prinzip sind aber auch andere an sich bekannte Transformationen mit nicht äquidistantem Frequenzraster zur Anpassung an besondere Anforderungen einsetzbar.

Die sich aus der Transformation ergebende Wertegruppe im Zeitbereich entspricht einer Unterteilung des das Entfernungstor g1 repräsentierenden Zeitintervalls in mehrere Teilintervalle und ist gleichwertig einer Entfernungsunterteilung des Entfernungstores. Damit liegt die angestrebte höhere Entfernungsauflösung für das einer ersten groben Entfernungsauflösung entsprechende Entfernungstor g1 vor. Die Transformation kann auch unmittelbar als Frequenz-Entfernungs-Transformation betrachtet werden

Eine entsprechende Transformation kann für andere oder alle Entfernungstore durchgeführt werden. Insbesondere kann eine erste Zieldetektion in groben Entfernungsschritten g1, g2, g3, g4 und nur in Entfernungstoren, in denen eine Zielentdeckungsschwelle überschritten wurde, eine höhere Entfernungsauflösung mittels einer Transformation durchgeführt werden. Im skizzierten Beispiel in FIG. 4 ist z.B. eine Transformation FFT1 für das Entfernungstor g1 und eine Transformation FFT2 für das Entfernungstor g2 vorgesehen. Für die grobe Entfernungsauflösung kann auch nur eine Sendefrequenz eingesetzt und dabei eine schnelle und über einen großen Bereich eindeutige Geschwindigkeitsschätzung mittels einer Dopplerverarbeitung durchgeführt werden.

Eine periodische Fortsetzung des Zyklus Z wie in FIG. 1 mit Sendeabschnitt s1Z und Empfangsabschnitt e1Z angedeutet ermöglicht vorteilhafterweise eine laufende Erneuerung der Transformation für ein ausgewähltes Entfernungstor in Zeitabständen T, wobei jeweils ein Abtastwert eines neuen Empfangsabschnitts e1Z den entsprechenden Abtastwert des letzten derselben Sendefrequenz zugeordneten Empfangsabschnitts e1 ersetzt.

In FIG. 5 ist eine erste Transformation FFT1 auf der Grundlage der Abtastwerte aus den Empfangsabschnitten e1, e2, e3, eine um T später durchzuführende zweite Transformation FFT1T auf der Grundlage der Abtastwerte aus Empfangsabschnitten e2, e3, e1Z usw. angedeutet. Für die Durchführung der Transformation ist dabei jeweils auf die Anordnung der Abtastwerte innerhalb der Wertegruppe nach gleichbleibender Reihenfolge der zugeordneten Sendefrequenzen zu achten.

Der Frequenzabstand von auf der Frequenzskala benachbarten Sendefrequenzwerten ist vorzugsweise in Verbindung mit der Durchlaßbandbreite einer Filterung in der Zwischenfrequenzlage so gewählt, daß die Filterung lediglich die Mischfrequenzen einer LO-Frequenz fmi mit den aus den zugeordneten Sendepulsen der um ZF frequenzversetzten Sendefrequenz fsi durchläßt und Mischfrequenzen mit allen anderen Sendefrequenzen ausblendet. Dadurch bleiben Störungen durch Überreichweitenreflexionen ausgeschlossen und die Pulsfolgefrequenz PRF = 1/T kann unmittelbar auf die gewünschte Reichweite des Überwachungsbereichs abgestimmt werden.

Eine Variante des geschilderten Mehrfrequenzverfahrens sieht vor, daß die zeitliche Reihenfolge der Sendefrequenzen abweicht von der Reihenfolge der Sendefrequenzen auf der Frequenzskala. Hierdurch kann die Störanfälligkeit gegen Sendepulse fremder gleichartiger Radaranordnungen, insbesondere gegen Sendepulse entgegenkommender Fahrzeuge bei Kfz-Abstandswarnradaren, erheblich verringert werden. Zur Durchführung der Transformation sind die Abtastwerte dann zuvor nach der Reihenfolge der zugeordneten Sendefrequenzen zu sortieren. Die vorzugsweise variable Reihenfolge der Sendefrequenzen ist vorteilhafterweise eine periodisch wiederholte Permutation der sortierten Frequenzfolge. Fremde Sendepulse werden bei der Frequenzumsetzung mit der LO-Frequenz im Regelfall in einem außerhalb der ZF-Filterung liegenden Bereich abgemischt und ausgeblendet.

Mit dem beschriebenen Mehrfrequenz-Radarverfahren kann vorteilhafterweise für den Fall, daß nur in einem Entfernungsteilbereich des Überwachungsgebiets eine Erhöhung der Entfernungsauflösung gewünscht wird, auch eine Erhöhung der Pulswiederholfrequenz PRF über den der maximalen Entfernung der Überwachung entsprechenden Wert hinaus erreicht werden. Es sei dabei angenommen, daß der bei der Erläuterung der grundsätzlichen Vorgehensweise gemäß der Erfindung anhand der FIG. 3 und 4 durch Entfernungstore g1 bis g4 abgedeckte Bereich dem gesamten Überwachungsbereich bis zur maximalen Entfernung entspreche. Wenn nur ein Teil des gesamten Entfernungsbereichs für eine höhere Entfernungsauflösung interessant ist, beispielsweise auf der Grundlage eines vorhergehenden Zielentdeckungsschritts mit der ersten groben Entfernungsauflösung, so ergeben sich innerhalb der Empfangsabschnitte e1, e2... jeweils interessierende Intervalle, im folgenden Empfangsintervalle genannt und nicht weiter interessierende Intervalle. In letztere können Empfangsintervalle und Sendeabschnitte zu anderen Sendefrequenzen eingefügt werden, so daß eine zeitliche Verdichtung und damit eine Erhöhung der Pulswiederholfrequenz möglich ist.

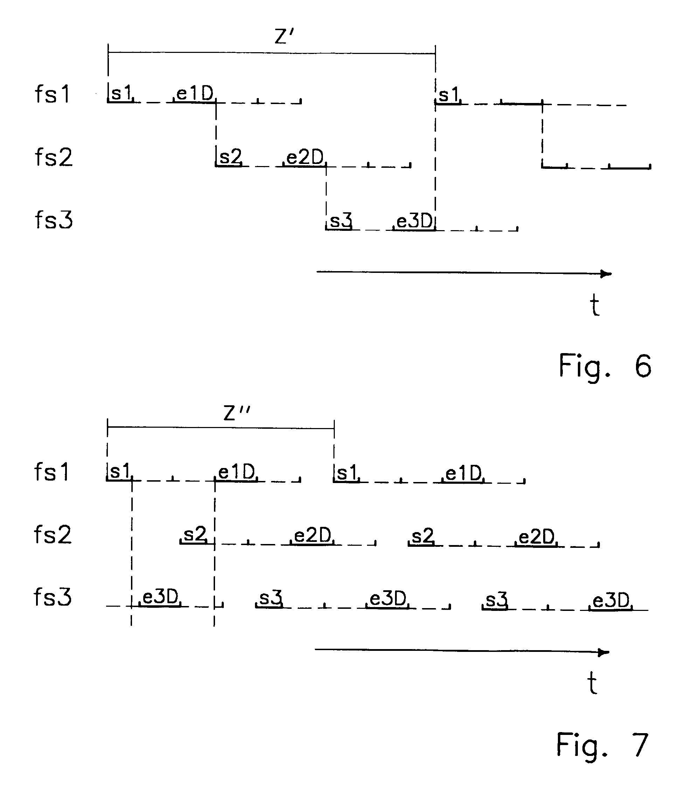

In FIG. 6 und FIG. 7 sind zwei mögliche Varianten einer solchen Erhöhung der PRF skizziert, bei einer Entfernungs- und Frequenzeinteilung wie in dem Beispiel nach FIG. 3 und 4. Die Darstellungsart ist gegenüber FIG. 3 insoweit vereinfacht, als keine Frequenzachse vorgesehen ist und jeweils Sendeabschnitte und zugehörige Empfangsintervalle innerhalb einer Zeile dargestellt sind mit verschiedenen Zeilen für unterschiedliche Sendefrequenzen.

Die Empfangsintervalle als Teilbereiche des gesamten Entfernungsbereichs sind mit e1D, e2D,... usw. bezeichnet. Die Empfangsintervalle sind definiert als Zeitintervalle, innerhalb derer die jeweils zugeordnete LO-Frequenz zur Verfügung gestellt wird.

In dem Beispiel nach FIG. 6 sei angenommmen, daß nach einer Zielentdeckung im Entfernungstor g2 nur dieser Teilentfernungsbereich höher aufgelöst werden soll. Da die Entfernungstore g3 und g4 nicht weiter von Interesse sind, kann der Sendeabschnitt s2 zur Sendefrequenz fs2 nach Ende des Empfangsintervalls e1D entsprechend dem Entfernungstor g2 zur Sendefrequenz fsl beginnen. Entsprechendes gilt für den Beginn des Sendeabschnitts s3 nach Ende des Empfangsintervalls e2D, den Beginn eines nächsten Sendeabschnitts s1 zur Sendefrequenz fsl nach Ende des Empfangsintervalls e3D usw. Die Sende-/Empfangsabschnitte zu den verschiedenen Sendefrequenzen rücken insgesamt zeitlich enger zusammen.

Im Beispiel nach FIG. 7 sei als weiter interessierender Teilentfernungsbereich lediglich das Entfernungstor g3 angenommen. Neben der zu FIG. 6 analogen Möglichkeit des Zusammenrückens von Sende-Empfangs-Abschnitten zu den einzelnen Sendefrequenzen bietet sich hier die Möglichkeit des Verschachtelns. In den zur Sendefrequenz fs1 nicht weiter interessierenden Zeitabschnitt zwischen s1 und g3 = e1D kann ein Empfangsabschnitt und ein Sendeabschnitt zu anderen Sendefrequenzen eingefügt werden, beispielsweise wie skizziert ein Empfangsintervall e3D zur Sendefrequenz fs3 und ein Sendeabschnitt s2 zur Sendefrequenz fs2. In gleicher Weise wird zwischen s2 und dem zugehörigen Empfangsintervall e2D ein Empfangsintervall e1D zu fs1 und ein Sendeabschnitt s3 zu fs3 und zwischen s3 und e3D im Empfangsintervall e2D und ein Sendeabschnitt sl eingefügt.

Bei beiden Varianten gemäß FIG. 6 und FIG. 7 ergeben sich komprimierte Zykluslängen Z' bzw. Z", die wesentlich geringer sind als die Länge eines vollständigen Zyklus nach FIG. 3 und dabei ist jeweils die gesamte gewünschte Information in Form von Abtastwerten aus den Empfangsintervallen e1D, e2D, e3D zu allen Sendefrequenzen enthalten. Bei den komprimierten Zykluslängen ist darauf zu achten, daß die Komprimierung nicht so weit geführt wird, daß Mehrdeutigkeiten durch Überreichweitenziele wieder von Bedeutung werden.

Gegenüber den skizzierten Beispielen mit aus Gründen der Übersichtlichkeit gewählten Beschränkungen hinsichtlich der Zahl der verschiedenen Sendefrequenzen und der Zahl der Entfernungstore ist in der Praxis bei einem Abstandswarnradar typischerweise auszugehen von 2 bis 16 verschiedenen Sendefrequenzen und 10 - 50 Entfernungstoren über einen Entfernungsbereich von 0 -150m. Die Sendefrequenzen liegen für solche Anwendungen vorzugsweise über 1GHz und die Sendepulslängen typischerweise bei 10 - 100nm.

Nachfolgend sind noch Beispiele für die automatische Auswahl eines der beiden vorstehend im Detail beschriebenen Verfahren zur erhöhten Entfernungsauflösung im zweiten Modus nach Maßgabe des im ersten Modus gewonnenen Ergebnisses angegeben:
- wenn im ersten Modus zu einem entdeckten Ziel eine hohe, z.B. über einem vorgebbaren Geschwindigkeitsschwellwert liegende Relativgeschwindigkeit (bzw. eine damit korrespondierende hohe Dopplerfrequenz) gemessen wird, wird im zweiten Modus das Verfahren mit verkürzten Sendepulsen und zeitlich gestaffelten Abtastrastern (FIG. 2) ausgeführt, da das Mehrfrequenzverfahren empfindlich gegen hohe Dopplerfrequenzen ist und evtl. zusätzliche Korrekturen erfordert
- wenn im ersten Modus Störungen, z.B. durch Fremdsignale, im selben Frequenzbereich festgestellt werden, wird im zweiten Modus nach dem Verfahren mit mehreren Sendefrequenzen, vorzugsweise mit Permutation der Frequenzfolge, vorgegangen (FIG. 3 bis 7);
- wenn im ersten Modus ein Ziel im Nahbereich, z.B. durch Vergleich der gemessenen Zielentfernung mit einer vorgebbaren Entfernungsschwelle, festgestellt wird, wird im zweiten Modus das Verfahren mit verkürzten Sendepulsen (FIG. 2) durchgeführt, wodurch die durch die Sendepulslänge bestimmte Blindzone verringert werden kann.

Zusätzlich kann auch während des Betriebs im zweiten Modus eine automatische Umschaltung auf ein anderes Verfahren vorgesehen sein, wenn gemessene Werte von Zielparametern z.B. nach den vostehend angegebenen Kriterien für eine anderes als das bereits ausgeführte Verfahren sprechen. Statt der Umschaltung auf ein anderes für den zweiten Modus vorgesehenes Verfahren kann eine Rückschaltung in den ersten Modus vorteilhaft sein.

## Patentansprüche

1. Puls-Radarverfahren, bei welchem in einem ersten Modus eine Zielentdeckung mit einer ersten Entfernungsauflösung durchgeführt und nach Maßgabe des im ersten Modus gewonnenen Ergebnisses ein zweiter Modus mit erhöhter Entfernungsauflösung durchgeführt wird,
dadurch gekennzeichnet,
daß in einem zweiten Modus die Sendepulse in einer von Radarperiode zu Radarperiode zeitversetzten Staffelung ausgesandt werden.

2. Verfahren nach Anspruch 1, dadurch gekennzeichnet, daß die Sendeimpulse gegenüber der Messung mit der ersten Entfernungsauflösung verkürzt werden.

3. Verfahren nach Anspruch 2, dadurch gekennzeichnet, daß eine Gruppe von Radarperioden (Burst) mit identischen relativen Zeitrastern zeitlich gebündelt werden und Gruppen mit verschiedenen relativen Zeitrastern zeitlich nacheinander ausgesandt werden.

4. Verfahren nach einem der Ansprüche 2 oder 3, dadurch gekennzeichnet, daß nach Maßgabe der erfolgten Zielentdeckungen in flexibler Abtaststrategie auf kürzere Sendepulslängen und entsprechend kürzere Abtastzeitfenster mit zeitlicher Staffelung in verschiedenen Radarperioden übergegangen wird.

5. Verfahren nach Anspruch 4, dadurch gekennzeichnet, daß die Verkürzung der Abtastzeitfenster sukzessive in mehreren Schritten erfolgt.

6. Verfahren nach Anspruch 1, dadurch gekennzeichnet, daß die Abtastzeitpunkte innerhalb einer Radarperiode im Zeitabstand TA und verschiedenen Radarperioden um kleinere Zeitdifferenzen entsprechend TF gestaffelt gelegt werden, so daß sich ein Echopuls im Empfangssignal über mehrere Zeitabschnitte der Länge TF erstreckt.

7. Verfahren nach Anspruch 6, dadurch gekennzeichnet, daß die Entfernungsschätzung durch Analyse der Signaleinhüllenden des Empfangssignals vorgenommen wird.

## Claims

1. Pulse radar method in which in a first mode a target detection is carried out by a first range resolution and according to the result obtained in the first mode a second mode with increased range resolution is carried out, characterised in that in a second mode the emitted pulse is transmitted in staggered form displaced in time from radar period to radar period.

2. Method according to claim 1, characterised in that the emitted pulse is shortened relative to the measurement by the first range resolution.

3. Method according to claim 2, characterised in that a group of radar periods (burst) with identical relative time rasters are grouped in terms of time and groups with different relative time rasters are transmitted successively in time.

4. Method according to one of claims 2 and 3, characterised in that according to the target detections carried out there is transition to a flexible scanning strategy based on shorter emitted pulse lengths and correspondingly shorter scanning time windows with staggering in terms of time in different radar periods.

5. Method according to claim 4, characterised in that the shortening of the scanning time windows takes place in succession in several steps.

6. Method according to claim 1, characterised in that the scanning time points are disposed to be staggered within a radar period in the time spacing TA and different radar periods by smaller time differences corresponding to TF, so that an echo pulse in the received signal extends over several time sections of the length TF.

7. Method according to claim 6, characterised in that the range estimation is carried by analysis of the signal shrouding of the received signal.

## Revendications

1. Procédé pour radar à impulsions, selon lequel, dans un premier mode, une détection de cibles est exécutée avec une première résolution de distance et, en fonction du résultat obtenu dans le premier mode, un second mode est mis en oeuvre avec une résolution de distance accrue,
caractérisé en ce
que dans un second mode, les impulsions d'émission sont émises avec un échelonnement décalé dans le temps d'une période du radar à la suivante.

2. Procédé selon la revendication 1, caractérisé en ce que les impulsions d'émission sont raccourcies par rapport à la mesure avec la première résolution de distance.

3. Procédé selon la revendication 2, caractérisé en ce qu'un groupe de périodes du radar (burst, c'est-à-dire salve) ayant des trames temporelles relatives identiques sont réunies dans le temps et des groupes ayant des trames temporelles relatives différentes sont émis successivement dans le temps.

4. Procédé selon l'une des revendications 2 ou 3, caractérisé en ce qu'en fonction des détections effectuées de cibles selon une stratégie souple de balayage d'exploration, on passe à des longueurs plus faibles des impulsions d'émission et à des fenêtres temporelles de balayage d'exploration plus courtes correspondantes avec un échelonnement dans le temps dans différentes périodes du radar.

5. Procédé selon la revendication 4, caractérisé en ce que le raccourcissement des fenêtres temporelles de balayage d'exploration s'effectue successivement en plusieurs étapes.

6. Procédé selon la revendication 1, caractérisé en ce que les instants de balayage d'exploration sont échelonnés à l'intérieur d'une période du radar en étant séparés par l'intervalle de temps TA et sont échelonnées à des intervalles de temps plus faibles correspondant à TA dans différentes périodes du radar, de sorte qu'une impulsion d'écho dans le signal de réception s'étend sur plusieurs tranches temporelles de longueur TF.

7. Procédé selon la revendication 6, caractérisé en ce que l'estimation de distance est exécutée par analyse de l'enveloppe du signal de réception.
